# EUROPÄISCHE PATENTANMELDUNG

(11) **EP 3 498 431 A1**
(43) Veröffentlichungstag der Anmeldung: **19.06.2019**
(21) Anmeldenummer: 18207035.9
(22) Anmeldetag: 19.11.2018
(51) Int. Cl.: B25J 9/00, G05D 1/00

(54) **VERFAHREN ZUR STEUERUNG EINES SAUGROBOTERS UND SAUGROBOTER ZUR DURCHFÜHRUNG EINES SOLCHEN VERFAHRENS**

(30) Priorität: 12.12.2017 DE 102017129521
(71) Anmelder: Miele & Cie. KG, 33332 Gütersloh (DE)
(72) Erfinder: Ernst, Holger, 33613 Bielefeld (DE); Kara, Seyfettin, 32139 Spenge (DE); Keisker, Jennifer, 33611 Bielefeld (DE); Pott, Thomas, 33719 Bielefeld (DE); Reinke, Nicole, 13347 Berlin (DE); Riedenklau, Eckard, 33647 Bielefeld (DE); Tschirschke, Daniel, 33607 Bielefeld (DE); Wolf, Cornelius, 33739 Bielefeld (DE)

(57) **Zusammenfassung**

Die Erfindung betrifft ein Verfahren zur Steuerung eines Saugroboters mittels eines Smart-Home-Systems, aufweisend Empfangen eines Aktivitätssignals von einem Kommunikationsmittel oder einem Medienwiedergabemittel mit einem Smart-Home-System; Berechnen eines Steuerungssignals des Saugroboters im Smart-Home-System; Senden des Steuerungssignals mit dem Smart-Home-System; Empfangen und Ausführen des Steuerungssignals mit dem Saugroboter. Ferner betrifft die Erfindung einen Saugroboter, welcher dazu ausgebildet ist, ein solches Verfahren durchzuführen.

## Beschreibung

Die Erfindung betrifft ein Verfahren zur Steuerung eines Saugroboters mittels eines Smart-Home-Systems, die folgenden Schritte aufweisend: Empfangen eines Aktivitätssignals von einem Kommunikationsmittel oder einem Medienwiedergabemittel mit einem Smart-Home-System; Berechnen eines Steuerungssignals des Saugroboters im Smart-Home-System; Senden des Steuerungssignals mit dem Smart-Home-System; Empfangen und Ausführen des Steuerungssignals mit dem Saugroboter. Ferner betrifft die Erfindung einen Saugroboter, welcher dazu ausgebildet ist, ein solches Verfahren durchzuführen.

Aus der Druckschrift US 2016 / 0121479 A1 ist ein Verfahren zur Steuerung eines Roboters mittels eines Smart-Home-Systems bekannt. Bei diesem Verfahren werden mit einem Smart-Home-System Daten erfasst und zur Steuerung des Saugroboters eingesetzt. Die mit dem Smart-Home-System erfassten Daten beschränken sich dabei auf Indikatoren für die Anwesenheit eines Benutzers. Nachteilig ist hierbei, dass diese Datenbasis für eine optimal an eine Benutzersituation angepasste Reinigungsaktivität eines Saugroboters nicht ausreicht.

Der Erfindung stellt sich somit das Problem ein verbessertes Verfahren zur Steuerung eines Saugroboters mittels eines Smart-Home-Systems zur Verfügung zu stellen.

Erfindungsgemäß wird dieses Problem durch ein Verfahren mit den Merkmalen des Patentanspruchs 1 und durch eine Vorrichtung gemäß Anspruch 7 gelöst. Vorteilhafte Ausgestaltungen und Weiterbildungen der Erfindung ergeben sich aus den nachfolgenden Unteransprüchen.

Erfindungsgemäß weist das Verfahren zur Steuerung eines Saugroboters mittels eines Smart-Home-Systems folgende Schritte auf:
Empfangen eines Aktivitätssignals von einem Kommunikationsmittel oder einem Medienwiedergabemittel mit einem Smart-Home-System;
Berechnen eines Steuerungssignals des Saugroboters im Smart-Home-System;
Senden des Steuerungssignals mit dem Smart-Home-System;
Empfangen und Ausführen des Steuerungssignals mit dem Saugroboter.

Ein Smart-Home-System ist dabei ein System zur Vernetzung von Haustechnik und/oder Haushaltsgeräten und/oder Unterhaltungselektronikkomponenten, welche sich in einer Wohnumgebung wie einem Haus oder einer Wohnung befinden. Die Vernetzung der einzelnen Komponenten dient dabei unter anderem der Fernsteuerung und Programmierung der einzelnen Komponenten beziehungsweise dem Datenaustausch zwischen den einzelnen Komponenten. Derartige Smart-Home-Systeme verfügen oftmals über eine Kommunikationsschnittstelle, welche einen Zugriff über ein externes Gerät wie ein Smartphone, Smart-Device, Tablet oder einen externen Rechner ermöglichen. Bei einigen Smart-Home-Systemen ist auch ein ferngesteuerter Zugriff über das Internet möglich. Das Ziel solcher Smart-Home-Systeme ist die Steigerung von Wohn- und Lebensqualität, Sicherheit und die Reduzierung des erforderlichen Energiebedarfes.

Als Kommunikationsmittel kommen sämtliche Formen von Telefonen, insbesondere Festnetztelefone, Mobiltelefone und Internettelefone in Frage. Auch Smart-Devices, Tabletcomputer oder ähnliche rechnerbasierte Komponenten, welche sich zur Kommunikation einsetzen lassen, sind Kommunikationsmittel im Sinne der Erfindung. Medienwiederhabemittel sind Elektronikkomponenten zur Wiedergabe von Audio- und/oder Videoinhalten, insbesondere Fernseher, Musikabspielgeräte und stationäre oder mobile Rechner.

Das erfindungsgemäße Verfahren versetzt den Saugroboter in die Lage, über das Smart-Home-System ein aktuelles Verhalten eines Benutzers zu erkennen, zu bewerten und seinen Reinigungsbetrieb adäquat an das erkannte Verhalten des Benutzers anzupassen. Eine Störung des Benutzers in spezifischen Situationen der Kommunikation oder des Medienkonsums durch den Reinigungsbetrieb des Saugroboters wird dadurch vermieden. Weiterhin vorteilhaft an dem erfindungsgemäßen Verfahren ist, das für die geräteseitige Implementation am Saugroboter keine zusätzliche kostenintensive Sensorik erforderlich wird.

Bevorzugt weist das Verfahren den weiteren Schritt auf: Senden eines Status des Saugroboters an das Smart-Home-System. Als Status des Saugroboters kommt hierbei insbesondere eine aktuelle Position des Saugroboters, ein aktueller Betriebszustand oder ein Reinigungsfortschritt in Frage. Als Status des Saugroboters kommt aber auch eine Information über die Ursache des aktuellen Verhaltens, wie beispielweise die Unterbrechung des Reinigungsbetriebs oder die Rückfahrt zu einer Basisstation, in Frage. Dieser weitere Verfahrensschritt ermöglicht ein Abrufen oder Bereitstellen des Saugroboter-Status über das Smart-Home-System an den Benutzer. Auf diese Weise wird der Benutzer in die Lage versetzt, das aktuelle Verhalten des Saugroboters nachzuvollziehen beziehungsweise zu kontrollieren und/oder zu steuern.

In einer bevorzugten Ausführungsform weist der Schritt Empfangen und Ausführen des Steuerungssignals mit dem Saugroboter den Unterschritt auf: Unterbrechung oder Fortsetzung des Reinigungsbetriebs des Saugroboters. Der Reinigungsbetrieb des Saugroboters ist dabei der Betriebszustand in dem der Saugroboter eine Fläche von Staub- und Schmutzpartikeln reinigt. Dieser Reinigungsbetrieb des Saugroboters wird in Folge einer Aktivität eines Kommunikationsmittels oder eines Medienwiedergabemittels durch das Steuerungssignal des Smart-Home-Systems unterbrochen oder fortgesetzt. Hierdurch wird ein Nutzer bei Kommunikation oder Medienkonsum nicht durch die Betriebsgeräusche eines Saugroboters gestört. Zudem wird eine Reinigungstätigkeit durch den Saugroboter dann wieder fortgesetzt, wenn der Benutzer zwar anwesend ist, aber keine Aktivität ausführt, die von den Betriebsgeräuschen des Saugroboters gestört werden kann.

In einer bevorzugten Ausführungsform weist der Schritt Empfangen und Ausführen des Steuerungssignals mit dem Saugroboter den Unterschritt auf: Speichern der aktuellen Position des Saugroboters. Das heißt, der Saugroboter verzeichnet beim Empfangen und Ausführen des Steuerungssignals seine aktuelle Position in einer internen Karte seiner Umgebung. Hierdurch dokumentiert der Saugroboter den Ort auf der zu reinigenden Fläche an dem der Saugroboter den Reinigungsbetrieb unterbrochen oder fortgesetzt hat. Dies gewährleistet die Vermeidung redundanter Reinigungsaktivitäten durch den Saugroboter infolge von Steuerungssignalen des Smart-Home-Systems. Somit weist das Verfahren zur Steuerung eines Saugroboters über ein Smart-Home-System keine negativen Auswirkungen auf die Reinigungseffizienz des Saugroboters auf.

In einer bevorzugten Ausführungsform weist der Schritt Empfangen und Ausführen des Steuerungssignals mit dem Saugroboter den Unterschritt auf: Speichern eines Bearbeitungszustandes einer zu reinigenden Bodenfläche. Das heißt, der Saugroboter verzeichnet beim Empfangen und Ausführen des Steuerungssignals den aktuellen Bearbeitungszustand einer zu reinigenden Bodenfläche in einer internen Karte seiner Umgebung. Hierdurch dokumentiert der Saugroboter den Bearbeitungszustand einer zu reinigenden Fläche zum Zeitpunkt des Empfangens und Ausführens des Steuerungssignals des Smart-Home-Systems. Dies vermeidet zum einen redundante Reinigungsaktivitäten des Saugroboters infolge von Steuerungssignalen des Smart-Home-Systems. Zum anderen kann dem Benutzer der aktuelle Bearbeitungszustand einer zu reinigenden Bodenfläche über ein externes Gerät, welches mit dem Saugroboter und/oder dem Smart-Home-System verbunden ist, zur Verfügung gestellt werden. Als externes Gerät kommt dabei insbesondere ein Smartphone, ein Smart-Device oder ein Tablet-Computer in Frage.

In einer bevorzugten Ausführungsform weist der Schritt Empfangen und Ausführen des Steuerungssignals mit dem Saugroboter den Unterschritt auf: Anfahren einer Basisstation des Saugroboters. Das heißt, infolge einer Ausprägung des Steuerungssignals des Smart-Home-Systems unterbricht der Saugroboter den Reinigungsbetrieb und fährt seine Basisstation an. Hierdurch verbleibt der Saugroboter nach der Unterbrechung des Reinigungsbetriebs nicht auf einer zu reinigenden Fläche und stellt somit kein Hindernis für den Benutzer dar.

Die Erfindung betrifft ferner einen Saugroboter, welcher dazu ausgebildet ist, ein Verfahren nach einer oder mehreren der beschriebenen Ausführungsformen durchzuführen. Für das Verfahren beschriebene Vorteile und Ausführungsformen gelten für den Saugroboter entsprechend.

Ein Ausführungsbeispiel der Erfindung ist in den Zeichnungen rein schematisch dargestellt und wird nachfolgend näher beschrieben. Es zeigen:
Figur 1 Ablaufdiagramm des erfindungsgemäßen Verfahrens;
Figur 2 Ablaufdiagramm einer Ausführungsform des Verfahrens.

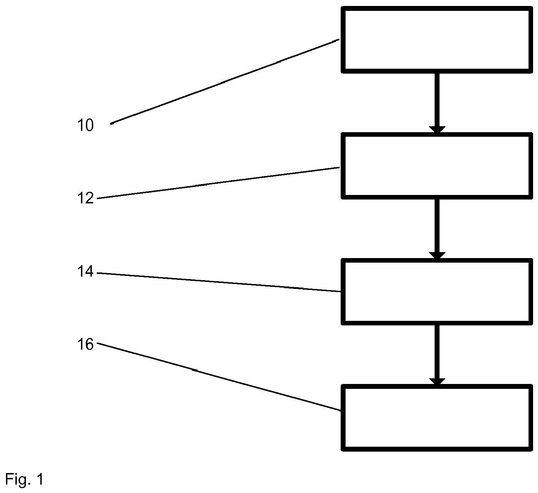

Figur 1 zeigt ein Ablaufdiagramm des erfindungsgemäßen Verfahrens zur Steuerung eines Saugroboters mittels eines Smart-Home-Systems. Das Verfahren wird initiiert durch das Empfangen 10 eines Aktivitätssignals von einem Kommunikationsmittel oder einem Medienwiedergabemittel durch ein Smart-Home-System. Das heißt, das Smart-Home-System erkennt in diesem Schritt 10 beispielsweise einen eingehenden oder ausgehenden Telefonanruf, welcher mit einem im Smart-Home-System eingerichteten Telefon getätigt wird. Auch eingehende oder ausgehende Telefonanrufe, welche mit einem Mobiltelefon innerhalb des Wirkungsbereiches des Smart-Home-Systems getätigt werden, können durch das Smart-Home-System über eine App auf dem Mobiltelefon erkannt werden. Zudem erkennt das Smart-Home-System in diesem Schritt 10 auf Medienwiedergabemitteln im Wirkungsbereich des Smart-Home-Systems ob Medien konsumiert werden. Das heißt, das Smart-Home-System fragt den aktuellen Status von Fernsehern, Musikanlagen, Medienservern, Smartphones, Tabletcomputern oder sonstigen Komponenten ab, welche sich zum Medienkonsum eignen. Auf diese Weise erkennt das Smart-Home-System, ob ein Benutzer innerhalb seines Wirkungsbereiches den Konsum eines Mediums auf einem Medienwiedergabemittel initiiert oder beendet hat.

In einem weiteren Schritt 12 des erfindungsgemäßen Verfahrens berechnet das Smart-Home-System in Abhängigkeit von einem empfangenen Aktivitätssignal ein Steuerungssignal für den Saugroboter. Das Steuerungssignal für den Saugroboter, welches durch das Smart-Home-System berechnet wird, kann dabei ein Signal zur Unterbrechung oder Aufnahme des Reinigungsbetriebs sein oder ein Signal zur Anfahrt oder Abfahrt von einer Basisstation des Saugroboters. Dabei kann sich das Steuerungssignal des Smart-Home-Systems auf die Initiierung einer Aktion durch den Saugroboter beschränken. Sodass für die Umsetzung des Steuerungssignals durch den Saugroboter auf die Sensorik und Steuerungseinheit des Saugroboters zurückgegriffen wird. In einer alternativen Ausführungsform ist es aber auch denkbar, dass das Smart-Home-System die Steuerungssignale für den Saugroboter vollumfänglich berechnet, welche dann vom Saugroboter lediglich ausgeführt werden.

In einem weiteren Schritt 14 sendet das Smart-Home-System das berechnete Steuerungssignal an den Saugroboter. Das Smart-Home-System sendet das Steuerungssignal dabei beispielsweise über eine W-LAN- oder Bluetooth-Verbindung an den Saugroboter.

In einem weiteren Schritt 16 empfängt der Saugroboter das Steuerungssignal und führt dieses aus. Die Ausführung des Steuerungssignals kann beispielsweise eine Unterbrechung des Reinigungsbetriebs des Saugroboters aufweisen, wobei der Saugroboter an seiner aktuellen Position verbleibt. In einer alternativen Ausführungsform unterbricht der Saugroboter den Reinigungsbetrieb und fährt automatisch seine Basisstation an. Für den Fall, dass das empfangene Aktivitätssignal vom Kommunikationsmittel oder Medienwiedergabemittel eine Beendigung einer Kommunikation oder eines Medienkonsums repräsentiert, kann die Ausführung des Steuerungssignals beispielsweise eine Aufnahme des Reinigungsbetriebs aufweisen.

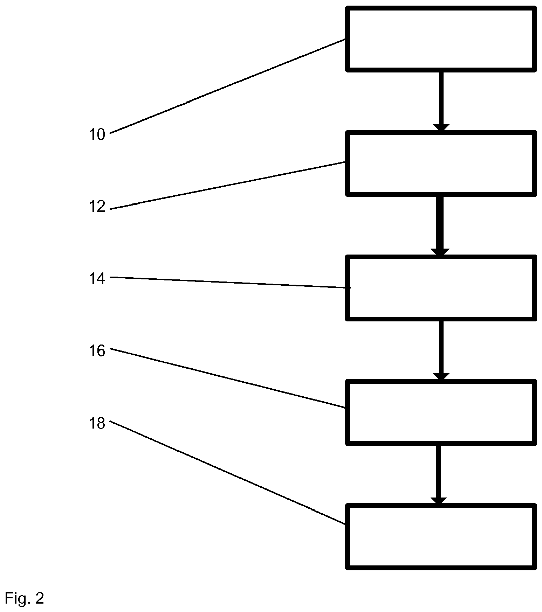

Figur 2 zeigt ein Ablaufdiagramm einer weiteren Ausführungsform des erfindungsgemäßen Verfahrens. Das Verfahren in dieser Ausführungsform weist neben den Schritten Empfangen eines Aktivitätssignals 10, Berechnen eines Steuerungssignals 12, Senden des Steuerungssignals 14 und Empfangen und Ausführen des Steuerungssignals 16 den weiteren Schritt Senden 18 eines Status des Saugroboters an das Smart-Home-System auf. Hierbei kann insbesondere die aktuelle Position des Saugroboters, der Bearbeitungszustand einer zu reinigenden Fläche oder eine Information über die Ursache für das aktuelle Verhalten des Saugroboters an das Smart-Home-System übermittelt werden. Der Benutzer kann dadurch über das Smart-Home-System selbst oder über ein weiteres externes Gerät, welches mit dem Smart-Home-System verbunden ist, die Aktivität des Saugroboters verfolgen und überwachen.

## Patentansprüche

1. Verfahren zur Steuerung eines Saugroboters mittels eines Smart-Home-Systems, wobei das Verfahren die folgende Schritte aufweist:
Empfangen eines Aktivitätssignals von einem Kommunikationsmittel oder einem Medienwiedergabemittel mit einem Smart-Home-System;
Berechnen eines Steuerungssignals des Saugroboters im Smart-Home-System; Senden des Steuerungssignals mit dem Smart-Home-System;
Empfangen und Ausführen des Steuerungssignals mit dem Saugroboter.

2. Verfahren nach Anspruch 1, wobei das Verfahren den weiteren Schritt aufweist:
Senden eines Status des Saugroboters an das Smart-Home-System.

3. Verfahren nach einem der vorgehenden Ansprüche, wobei das Ausführen des Steuerungssignals mit dem Saugroboter eine Unterbrechung oder Fortsetzung des Reinigungsbetriebs des Saugroboters aufweist.

4. Verfahren nach einem der vorgehenden Ansprüche, wobei das Ausführen des Steuerungssignals ein Speichern der aktuellen Position des Saugroboters aufweist.

5. Verfahren nach einem der vorgehenden Ansprüche, wobei das Ausführen des Steuerungssignals ein Speichern eines Bearbeitungszustandes einer zu reinigenden Bodenfläche aufweist.

6. Verfahren nach einem der vorhergehenden Ansprüche, wobei das Ausführen des Steuerungssignals mit dem Saugroboter ein Anfahren einer Basisstation des Saugroboters aufweist.

7. Saugroboter der dazu eingerichtet ist, ein Verfahren nach einem der vorgehenden Ansprüche durchzuführen.
